# EUROPEAN PATENT SPECIFICATION

(11) **EP 4 531 192 B1**
(45) Date of publication and mention of the grant of the patent: **25.11.2026**
(21) Application number: 23916416.3
(22) Date of filing: 07.12.2023
(51) Int. Cl.: H01M 10/052, H01M 50/59, H01M 50/502, H01M 50/588, H01M 50/526, H01M 50/522, H01M 50/204, C09J 7/21, H01M 10/42, H01M 10/655, H01M 50/211, H01M 50/507

(54) **BUSBAR ASSEMBLY AND BATTERY PACK INCLUDING THE SAME**
SAMMELSCHIENENANORDNUNG UND BATTERIEPACK DAMIT
ENSEMBLE BARRE OMNIBUS ET BLOC-BATTERIE LE COMPRENANT

(30) Priority: 11.01.2023 KR 20230004099
(43) Date of publication of application: 02.04.2025
(73) Proprietor: LG Energy Solution, Ltd., Seoul 07335 (KR)
(72) Inventor: YUN, Sunwoo, Daejeon 34122 (KR)
(74) Representative: Plasseraud IP
(86) International application number: PCT/KR2023/020071
(87) International publication number: WO 2024/150933

(56) References cited:
- CN-U- 215 770 643
- CN-U- 218 274 013
- KR-A- 20140 136 246
- KR-A- 20160 041 311
- KR-A- 20210 050 983
- KR-B1- 102 411 256

## Description

### [TECHNICAL FIELD]

The present disclosure relates to a busbar assembly and a battery pack including the same, and more specifically, to a busbar assembly having an improved fire resistance, and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, a lithium secondary battery, and the like. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery generally uses lithium-based oxide and a carbon material as a positive electrode active material and a negative electrode active material, respectively. The lithium secondary battery includes an electrode assembly in which a positive electrode plate and a negative electrode active material are arranged with a separator interposed between them, and an exterior material or a battery case which hermetically houses the electrode assembly together with an electrolyte.

Depending on the shape of the exterior material, generally, a lithium secondary battery may be classified into a can type secondary battery where the electrode assembly is incorporated into a metal can and a pouch type battery where the electrode assembly is incorporated into a pouch of an aluminum laminate sheet.

In the case of a secondary battery used for small-sized devices, two to three battery cells are disposed, but in the case of a secondary battery used for a medium- and large-sized device such as automobiles, a battery module in which a plurality of battery cells are electrically connected is used. In such a battery module, a plurality of battery cells are connected to each other in series or parallel to form a cell assembly, thereby improving capacity and output. Further, one or more battery modules can be mounted together with various control and protection systems such as a BDU (Battery Disconnect Unit), a BMS (Battery Management System), and a cooling system to form a battery pack.

In the battery pack configured to gather a plurality of battery modules, heat generated from multiple battery cells can be added up in a narrow space, so that the temperature can rise more quickly and excessively. In other words, battery modules in which multiple battery cells are stacked and a battery pack equipped with these battery modules can obtain high output, but it is not easy to remove heat generated from the battery cells during charging and discharging. When the heat dissipation of battery cells is not properly performed or thermal runaway phenomenon occurs in a battery cell, the possibility of explosion or ignition increases.

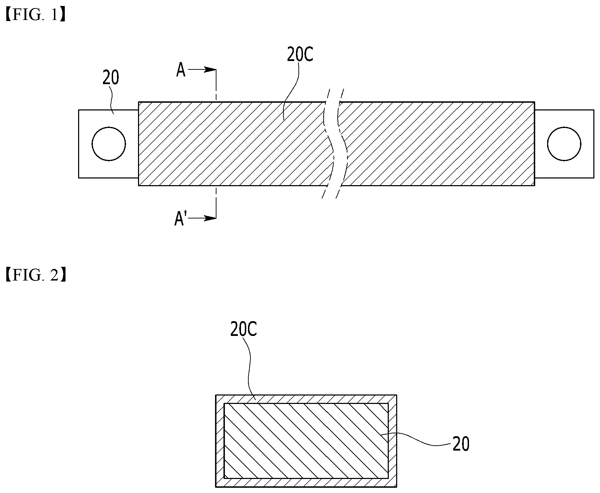

Meanwhile, a busbar, as e.g. described in CN 218 274 013 U, connected to the battery module is provided inside the battery pack FIG. 1 is a plan view showing a conventional busbar, and FIG. 2 is a cross-sectional view showing a cross section taken along the cutting line A-A' in FIG. 1.

Referring to FIGS. 1 and 2, a conventional busbar 20 is a rod-shaped metal member that extends along the longitudinal direction, and a through hole for connecting with a terminal busbar of a battery module may be formed at both end parts of the busbar 20. Such a busbar 20 is configured to be in charge of HV (High voltage) connection in the battery pack. The HV connection means a connection that serves as a power source to supply electric power, and the busbar 20 is configured to guide electrical connection of the battery module, and generally includes a metal material having excellent electrical conductivity. As an example, the busbar 20 may include a copper (Cu) material.

The covering member 20C can surround such a busbar 20. The covering member 20C may include a material that is electrically insulating, and for example, it may include a silicone material or an epoxy material. Since the covering member 20C surrounds the busbar 20 through which a high current flows, it is possible to prevent the busbar 20 from coming into contact with other electrical equipment or conductive members in addition to the terminal busbar of the battery module, thereby interrupting generation of short circuits.

In recent years, battery packs have been required to have equipment in which flames are not ejected to the outside of the battery pack even if a fire occurs inside the battery pack. Since the flame generated inside the battery pack has a very high temperature of approximately 1000°C, the covering member 20C surrounding the busbar 20 may melt, so that the busbar 20 may be exposed. If the exposed busbar 20 comes into contact with another electrical component or conductive member to cause a short circuit, the internal flame may further spread, and the flame may propagate to the outside of the battery pack. This could ultimately lead to an explosion of the battery pack or the vehicle equipped with the battery pack.

Therefore, there is a need to develop a technology for a busbar assembly that can maintain electrical insulation properties even if a flame occurs inside the battery pack.

### [DETAILED DESCRIPTION OF THE INVENTION]

### [Technical Problem]

It is an object of the present disclosure to provide a busbar assembly that can maintain electrical insulation properties without being melted even if a flame occurs inside the battery pack, and a battery pack including the same.

However, the technical problems to be solved by embodiments of the present disclosure

However, the technical problems to be solved by embodiments of the present disclosure are not limited to the above-mentioned problems, and can be variously expanded within the scope of the technical idea included in the present disclosure.

### [Technical Solution]

According to one embodiment of the present disclosure, there is provided a busbar assembly comprising: a busbar for guiding electrical connection inside the battery pack; a fire resistant silicone layer that surrounds the outer peripheral surface of the busbar; and a glass fiber tape that surrounds the fire resistant silicone layer, wherein the glass fiber tape includes a glass fiber layer, an adhesive part which is a part of one surface of the glass fiber layer where an adhesive is provided, and a non-adhesive part which is a part of one surface of the glass fiber layer where no adhesive is provided.

The adhesive part and the non-adhesive part are composed of plural parts, and the non-adhesive part may be an empty space that is formed between the adhesive parts and where the glass fiber layer is exposed so that a gas discharge path is formed by the empty space of the non adhesive part.

The glass fiber tape may be a rectangular tape having a long side and a short side, and the glass fiber tape may surround the fire resistant silicone layer along the long side of the glass fiber tape.

The adhesive part and the non-adhesive part may be alternately located along a direction in parallel with the long side of the glass fiber tape.

The adhesive part and the non-adhesive part may be configured to extend along a direction in parallel with the short side of the glass fiber tape.

The adhesive part may be located on each of the short sides of the glass fiber tape.

The glass fiber tape may be wound multiple times along the longitudinal direction of the busbar so as to form overlapping layers in at least some areas.

The glass fiber tape may be wound obliquely multiple times around the fire resistant silicone layer so that some areas between any one layer of the glass fiber tape and another layer
The fire resistant silicone layer may include a silicone material that is ceramified at high temperature.

According to another embodiment of the present disclosure, there is provided a battery pack comprising: at least one busbar assembly as described above; battery modules; a BDU (Battery Disconnect Unit) module for controlling electrical connection of the battery modules; and a BMS (Battery Management System) module that monitors and controls the operation of the battery module, wherein the at least one busbar assembly electrically connects at least one of between the battery modules, between the battery module and the BDU module, between the battery module and the BMS module, or between the BDU module and the BMS module.

### [Advantageous Effects]

According to embodiments of the present disclosure, a fire resistant silicone layer ceramified at high heat or flame, and a glass fiber tape surrounding the fire resistant silicone layer are provided in the busbar assembly, so that the electrical insulation properties of the busbar assembly can be maintained even if a flame occurs inside the battery pack.

In particular, an adhesive part and a non-adhesive part are formed together in the glass fiber tape, so that gases generated when the busbar assembly is exposed to flame can be quickly discharged.

Effects obtainable from the present disclosure are not limited to the effects mentioned above, and additional other effects not mentioned herein will be clearly understood from the description of the appended claims by those skilled in the art.

### [BRIEF DESCRIPTION OF THE DRAWINGS]

FIG. 1 is a plan view showing a conventional busbar.
FIG. 2 is a cross-sectional view showing a cross section taken along the cutting line A-A' in FIG. 1.
FIG. 3 is a plan view showing a battery pack according to an embodiment of the present disclosure.
FIG. 4 is a perspective view showing one of the battery modules included in the battery pack of FIG. 3.
FIG. 5 is a partial perspective view showing a state in which the module frame and the end plate are removed in the battery module of FIG. 4.
FIG. 6 is a plan view showing a state in which the glass fiber tape is removed in the busbar assembly according to an embodiment of the present disclosure.
FIG. 7 is a plan view showing a state in which a glass fiber tape is wound in the busbar assembly of FIG. 6.
FIGS. 8 (a) and (b) are a plan view and a front view each showing a glass fiber tape according to an embodiment of the present disclosure.
FIG. 9 is a cross-sectional view showing a cross section taken along the cutting line B-B' in FIG. 7.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of portions that are not related to the description will be omitted for clarity, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

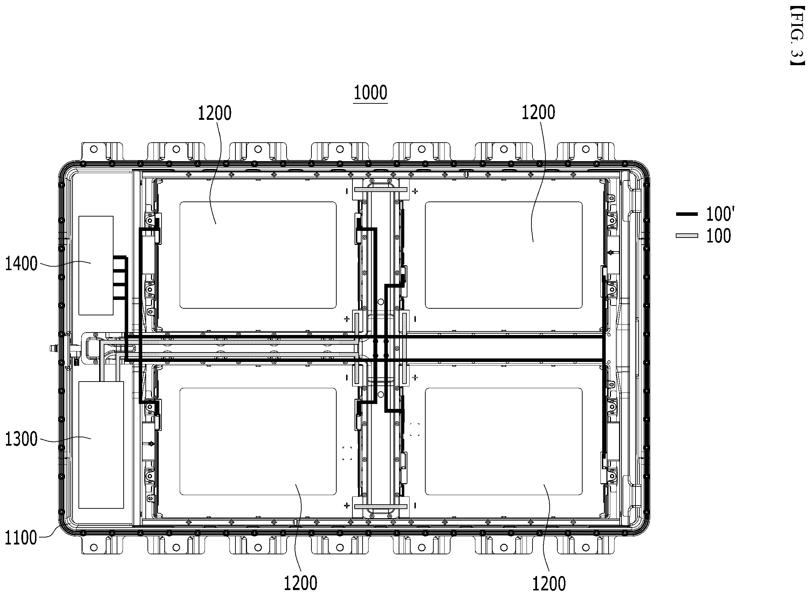

FIG. 3 is a plan view showing a battery pack according to an embodiment of the present disclosure.

Referring to FIG. 3, the battery pack 1000 according to one embodiment of the present disclosure includes a busbar assembly 100; battery modules 1200, a BDU (Battery Disconnect Unit) module 1300 for controlling electrical connection of the battery modules 1200, and a BMS (Battery Management System) module 1400 that monitors and controls the operation of the battery module 1200. At least one busbar assembly 100 according to the present embodiment electrically connects at least one of between the battery modules 1200, between the battery module 1200 and the BDU module 1300, between the battery module 1200 and the BMS module 1400, or between the BDU module 1300 and the BMS module 1400. Specifically, a plurality of battery modules 1200 may be housed in the pack frame 1100, and electrical connection between the battery modules 1200 or electrical connection between the battery module 1200 and the BDU module 1300 may be made by the busbar assembly 100. That is, the busbar assembly 100 according to the present embodiment can be in charge of HV (High voltage) connection. Here, the HV connection is a power connection that serves to supply electric power requiring high voltage, and refers to a connection between battery cells or a connection between battery modules.

Meanwhile, the BDU module 1300 is a member for controlling electrical connection of the battery module 1200, and can cut off power between the power converter and the battery module 1200. When a condition occurs in which the current exceeds the set range, the BDU module 1300 can cut off electric power to the battery pack 1000 to ensure safety of the battery pack 1000.

Meanwhile, the LV connection member 100' according to the present embodiment may be in charge of electrical connection between the battery module 1200 and the BMS module 1400. The electrical connection herein is a LV (low voltage) connection, which means a sensing connection for detecting and controlling the voltage and temperature of the battery module 1200. Specifically, sensors, and the like are arranged inside the battery module 1200, and real-time temperature information or voltage information of the battery module 1200 is transmitted to a BMS module 1400 via the LV connection member 100'. It is possible to monitor and control the real-time operating status of the battery module 1200 via the BMS module 1400. Although not specifically illustrated, an HV current sensor may be integrated into the BMS module 1400. In this case, the busbar assembly according to the present embodiment may be in charge of electrical connection between the battery module 1200 and the BMS module 1400 or between the BDU module 1300 and the BMS module 1400.

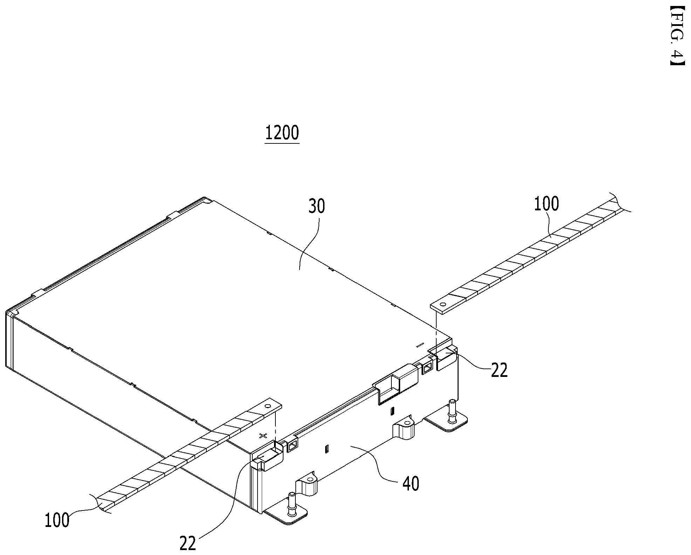

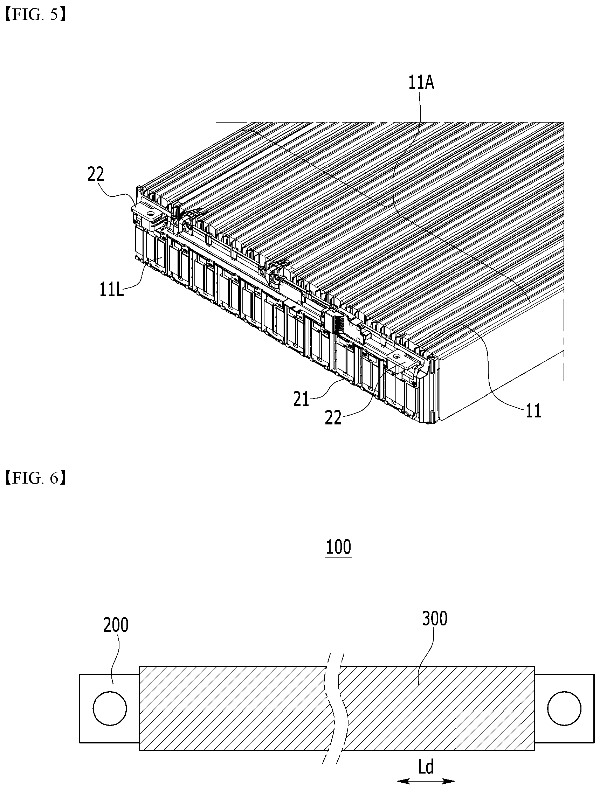

Next, the battery module 1200 according to the present embodiment will be described with reference to FIGS. 4 and 5. In this regard, the battery module 1200 described below has one exemplary structure of a battery module including a plurality of battery cells 11, and various types of battery modules including a plurality of battery cells can be applied.

FIG. 4 is a perspective view showing one of the battery modules included in the battery pack of FIG. 3. FIG. 5 is a partial perspective view showing a state in which the module frame and the end plate are removed in the battery module of FIG. 4.

Referring to FIGS. 4 and 5, the battery module 1200 according to the present embodiment may include a battery cell stack 11A in which a plurality of battery cells 11 are stacked. The battery cell stack 11A is illustrated in FIG. 5. Such a battery cell stack 11A can be housed in the module frame 30 and the end plate 40.

The battery cell 11 may be a pouch-type battery cell. Such a pouch-type battery cell may be formed by housing an electrode assembly in a pouch case made of a laminate sheet including a resin layer and a metal layer, and then fusing the outer peripheral part of the pouch case. Such battery cells 11 may be formed in a rectangular sheet structure. The electrode lead 11L connected to the electrode assembly protrudes to the outside of the pouch case, wherein the electrode leads 11L of each battery cell 11 may be electrically connected to each other via the lead busbar 21. On the other hand, at least one electrode lead 11L may be connected to the terminal busbar 22. A portion of the terminal busbar 22 may be exposed to the outside of the battery module 1200 as illustrated in FIG. 4. Both the lead busbar 21 and the terminal busbar 22 may include a metal material with excellent electrical conductivity.

The busbar assembly 100 according to the present embodiment is electrically connected to such a terminal busbar 22, so that the above-mentioned HV connection can be achieved. That is, the battery module 1200 may be electrically connected to the other battery module 1200, BDU module 1300, or BMS module 1400 via the busbar assembly 100 connected to the terminal busbar 22.

Next, a busbar assembly according to an embodiment will be described in detail with reference to FIGS. 6 to 9.

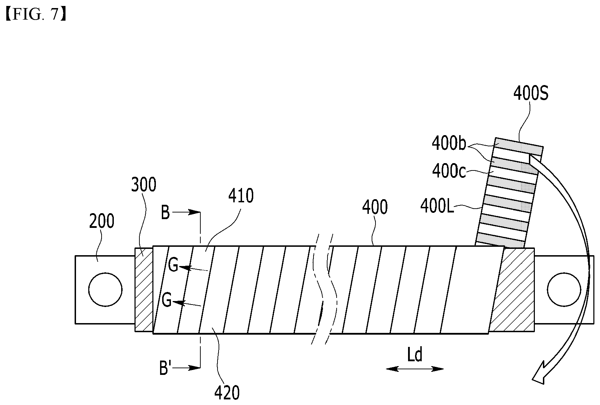

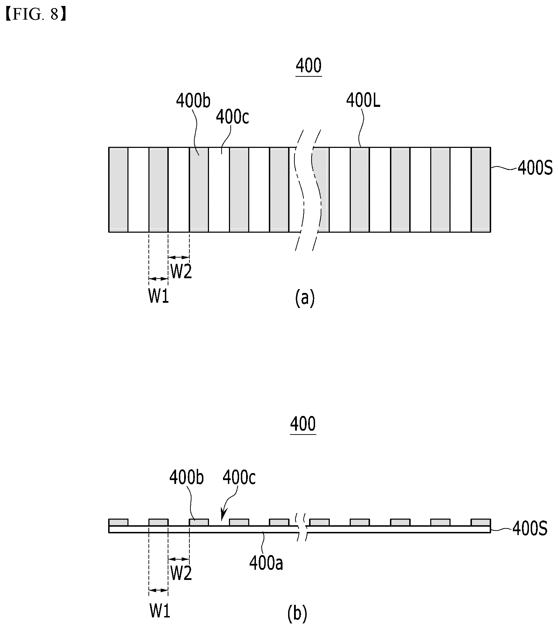

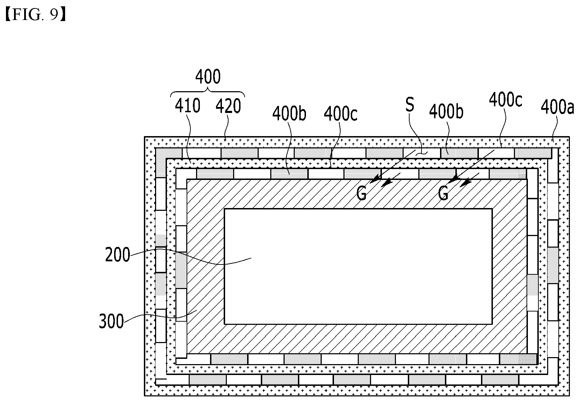

FIG. 6 is a plan view showing a state in which the glass fiber tape is removed in the busbar assembly according to an embodiment of the present disclosure. FIG. 7 is a plan view showing a state in which a glass fiber tape is wound in the busbar assembly of FIG. 6. FIGS. 8 (a) and (b) are a plan view and a front view each showing a glass fiber tape according to an embodiment of the present disclosure. FIG. 9 is a cross-sectional view showing a cross section taken along the cutting line B-B' in FIG. 7.

Referring to FIGS. 6 to 9 together, the busbar assembly 100 according to an embodiment of the present disclosure includes a busbar 200 for guiding electrical connection within the battery pack 1000; a fire resistant silicone layer 300 surrounding the outer peripheral surface of the busbar 200; and a glass fiber tape 400 surrounding the fire resistant silicone layer 300.

The busbar 200 is configured to guide electrical connection, that is, HV connection, of the battery module, and may include a metal material with excellent electrical conductivity. As an example, the busbar 200 may include copper(Cu) material. The busbar 200 may be a metal rod extending along the longitudinal direction Ld.

The fire resistant silicone layer 300 may include a fire resistant silicone material. Specifically, the fire resistant silicone material can be molded onto the outer peripheral surface of the busbar 200, thereby forming the fire resistant silicone layer 300. This fire resistant silicone layer 300 may surround the outer peripheral surface of the busbar 200 except for some areas at both end parts of the busbar 200 that are connected to the terminal busbar 22 (see FIG. 4). The fire resistant silicone layer 300 having electrical insulation properties functions as an insulating layer that protects the busbar 200, thereby preventing the busbar 200 from coming into contact with other electrical equipment or conductive members and causing a short circuit.

The fire resistant silicone material is a material that is ceramified when exposed to flame or at high heat, unlike common silicone materials that are burn when exposed to flame or at high temperatures. The fire resistant silicone material may include silicone polymer and silica. The applied silicone polymer may be a polysiloxane-based compound having a vinyl group as a functional group, and corresponds to a base material for a fire resistant silicone material. The silica may be fumed silica, which is a reinforcing filler included in the silicone polymer. A high-purity silicone chloride (SiCl₄) compound can be produced using metallic silicone as a main raw material through reaction with hydrochloric acid and purification process, and this can be reacted with hydrogen and oxygen in a high temperature flame to obtain fumed silica. Further, the fire resistant silicone may contain platinum Pt as a catalyst.

When the fire resistant silicone material is exposed to flame or high heat, silica (SiO₂) is crosslinked together with decomposition of the silicone polymer to form a ceramic material. The fire resistant silicone layer 300 according to the present embodiment does not burn or melt, but can be ceramified and maintain electrical insulation properties, even if exposed to flame or placed in a high-temperature environment.

The glass fiber tape 400 may include a glass fiber layer and an adhesive layer formed on one surface of the glass fiber layer. The glass fiber layer may be a woven fabric containing glass fibers, and the adhesive layer may include at least one of acrylic resin or silicone resin. The adhesive layer may include an adhesive part and a non-adhesive part, which will be described later. The glass fiber tape 400 may be a rectangular tape having a long side 400L and a short side 400S. That is, the long side 400L herein refers to a relatively long side of the rectangular tape, and the short side 400S refers to a relatively short side of the rectangular tape. Such a glass fiber tape 400 can surround the fire resistant silicone layer 300 along the long side 400L of the glass fiber tape 400. Specifically, the glass fiber tape 400 may be wound multiple times around the fire resistant silicone layer 300 along the longitudinal direction Ld of the busbar 200 so as to form overlapping layers 410 and 420 in at least some areas. Here, the layers 410 and 420 of the glass fiber tape 400 correspond to an interlayer structure formed by overlapping at least some areas among the portions of the glass fiber tape 400 adjacent to each other. More specifically, the glass fiber tape 400 may be wound obliquely multiple times around the fire resistant silicone layer 300 so that some areas between any one layer 410 of the glass fiber tape 400 and another layer 420 adjacent thereto overlap. In FIG. 7, some areas of both end parts of the fire resistant silicone layer 300 are expressed as exposed without being wound around the glass fiber tape 400, however, this is for convenience of explanation, and the entire area of the fire resistant silicone layer 300 may be wrapped by the glass fiber tape 400.

The glass fiber tape 400 can protect the fire resistant silicone layer 300 from flame. That is, the glass fiber tape 400 completely surrounds the fire resistant silicone layer 300 and can temporarily protect the fire resistant silicone layer 300 from flames generated inside the battery pack.

Furthermore, the glass fiber tape 400 can supplement the structural rigidity of the busbar 200 and the fire resistant silicone layer 300 to improve the insulation performance of the busbar 200. Specifically, when the fire resistant silicone layer 300 is ceramified, the insulation properties are maintained but the strength is weakened, so that the fire resistant silicone layer 300 may be broken by external force. The glass fiber tape 400 can supplement the rigidity of the fire resistant silicone layer 300 and prevent the fire resistant silicone layer 300 from being broken by external force .

Meanwhile, the glass fiber tape 400 according to the present embodiment includes a glass fiber layer 400a, an adhesive part 400b which is a part of one surface of the glass fiber layer 400a where an adhesive is provided, and a non-adhesive part 400c which is a part of one surface of the glass fiber layer 400a where no adhesive is provided. Specifically, the glass fiber layer 400a is a base material layer containing glass fibers, and an adhesive having an adhesive component may be applied to one surface of the glass fiber layer 400a to form an adhesive part 400b. The non-adhesive part 400c corresponds to a part where an adhesive is not applied and a part of the glass fiber layer 400a is exposed. In this specification, for convenience of explanation, the part where the glass fiber layer 400a is partially exposed is referred to as the non-adhesive part 400c. The glass fiber layer 400a may be a woven fabric containing glass fibers, and the adhesive part 400b may include at least one of acrylic resin or silicone resin.

The adhesive part 400b and the non-adhesive part 400c may be composed of plural parts, wherein the non-adhesive part 400c may correspond to an empty space that is formed between the adhesive parts 400b and where the glass fiber layer 400a is exposed.

As described above, the glass fiber tape 400 may be a rectangular tape having a long side 400L and a short side 400S, and the glass fiber tape 400 may be wound multiple times around the fire resistant silicone layer 300 along the long side 400L of the glass fiber tape 400. Here, the adhesive part 400b and the non-adhesive partn 400c may be alternately located along a direction in parallel with the long side 400L of the glass fiber tape 400. Further, the adhesive part 400b and the non-adhesive part 400c may be extended in a direction in parallel with the short side 400S of the glass fiber tape 400. That is, in the glass fiber tape 400 according to the present embodiment, the adhesive part 400b and the non-adhesive part 400c may form a stripe pattern along a direction in parallel with the long side 400L of the glass fiber tape 400.

When the busbar assembly 100 is exposed to flame or reaches a high temperature, gas may be generated from the fire resistant silicone layer 300 and the adhesive part 400b of the glass fiber tape 400. Gas generated from the fire resistant silicone layer 300 and the glass fiber tape 400 can accelerate internal flames, impair the structural stability of the busbar assembly 100, and thus adversely affect the insulation performance of the busbar 200. Specifically, if the generated gas is blocked by the tightly attached glass fiber tape 400 and is not discharged, some of the parts wrapped around the glass fiber tape 400 may swell, and the glass fiber tape 400 may eventually burst and be damaged. If the glass fiber tape 400 is damaged, the fire resistant silicone layer 300 may collapse without forming a dense structure, ultimately impairing the mechanical rigidity and electrical insulation of the busbar assembly 100. In addition, the gas generated from the fire resistant silicone layer 300 and the glass fiber tape 400 may contain carbonized components. If carbonized components accumulate internally, they have an adverse effect on electrical insulation.

In the present embodiment, the adhesive layer of the glass fiber tape 400 is composed of an adhesive part 400b and a non-adhesive part 400c, so that the gas generated from the fire resistant silicone layer 300 or the glass fiber tape 400 can be discharged quickly under the situation where flame has occurred. A gas discharge path may be formed by the empty space of the non-adhesive part 400c. That is, the busbar assembly 100 according to the present embodiment is configured such that the glass fiber tape 400 is wound multiple times around the fire resistant silicone layer 300 to ensure insulation property and structural stability. Gas generated in a flame situation can be easily discharged through the non-adhesive part 400c, which is an empty space. Thereby, the structural stability and insulation property of the busbar assembly 100 in high temperature and high temperature environments can be greatly improved.

In particular, as shown in FIG. 9, the glass fiber tape 400 may be wound multiple times into a plurality of layers 410 and 420. If the non-adhesive part 400c is not provided, it is difficult for gas generated from the fire resistant silicone layer 300 or the glass fiber tape 400 to be discharged because the glass fiber tape 400 is clogged by the plurality of layers 410 and 420. In the case of the present embodiment, the gas G may be discharged through the empty space S of the non-adhesive part 400c between the adhesive parts 400b in the inner area of the previously wound one layer 410 of the glass fiber tape 400. In addition, gas G may be discharged through the empty space S of the non-adhesive part 400c between the adhesive parts 400b even in the outer area of the previously wound one layer 410 of the glass fiber tape 400. The gas G flowing along the empty space S of the non-adhesive part 400c is ultimately discharged to the outside through a path between one layer 410 and the other layer 420, as shown in FIG. 7.

In particular, as described above, since the adhesive part 400b and the non-adhesive part 400c form a stripe pattern along the long side 400L of the glass fiber tape 400, a gas discharge path can be secured even if the glass fiber tape 400 is wrapped multiple times around the fire resistant silicone layer 300 along the long side 400L of the glass fiber tape 400.

Referring again to FIG. 7 and FIGS. 8 (a) and (b), the adhesive part 400b may be located on each of the short sides 400S of the glass fiber tape 400, and may be completely adhered to the end of the glass fiber tape 400. That is, in order to prevent the wound glass fiber tape 400 from unwinding, the short sides 400S of the glass fiber tape 400 can be formed as adhesive parts 400b.

Meanwhile, as an example, the ratio of the width W1 of the adhesive part 400b to the width W2 of the non-adhesive part 400c may be 0.5 or more and 3.5 or less. If the ratio of the width W1 of the adhesive part 400b to the width W2 of the non-adhesive part 400c is less than 0.5, the area of the adhesive part 400b is relatively insufficient, so that the adhesive strength of the glass fiber tape 400 may not be sufficiently secured. In addition, when the ratio of the width W1 of the adhesive part 400b to the width W2 of the non-adhesive part 400c is greater than 3.5, the area of the non-adhesive part 400c may be too narrow to effectively discharge gas.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS (Battery Management System), a BDU (Battery Disconnect Unit), and a cooling system to form a battery pack.

The battery module or the battery pack can be applied to various devices. Specifically, it can be applied to vehicle means such as an electric bike, an electric vehicle, and a hybrid electric vehicle, or an ESS (Energy Storage System) and may be applied to various devices capable of using a secondary battery, without being limited thereto.

Although the invention has been described in detail with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100: busbar assembly
200: busbar
300: fire resistant silicone layer
400: glass fiber tape
400a: glass fiber layer
400b: adhesive part
400c: non-adhesive part
1000: battery pack
1100: pack frame
1200: battery module
1300: BDU module
1400: BMS module

## Claims

1. A busbar assembly (100) comprising:
a busbar (200) for guiding electrical connection inside a battery pack;
a fire resistant silicone layer (300) that surrounds the outer peripheral surface of the busbar; and
a glass fiber tape (400) that surrounds the fire resistant silicone layer (300),
wherein the glass fiber tape (400) includes a glass fiber layer (400a), an adhesive part (400b) which is a part of one surface of the glass fiber layer (400a) where an adhesive is provided, and a non-adhesive part (400c) which is a part of the one surface of the glass fiber layer (400a) where no adhesive is provided,
wherein the adhesive part (400b) and the non-adhesive part (400c) are composed of plural parts, and
the non-adhesive part (400c) is an empty space that is formed between the adhesive parts (400b) and where the glass fiber layer (400a) is exposed so that a gas discharge path is formed by the empty space of the non-adhesive part (400c).

2. The busbar assembly (100) according to claim 1, wherein:
the glass fiber tape (400) is a rectangular tape having a long side and a short side, and
the glass fiber tape (400) surrounds the fire resistant silicone layer (300) along the long side of the glass fiber tape (400).

3. The busbar assembly (100) according to claim 2, wherein:
the adhesive part (400b) and the non-adhesive part (400c) are alternately located along a direction in parallel with the long side of the glass fiber tape (400).

4. The busbar assembly (100) according to claim 2, wherein:
the adhesive part (400b) and the non-adhesive part (400c) are configured to extend along a direction in parallel with the short side of the glass fiber tape (400).

5. The busbar assembly (100) according to claim 2, wherein:
the adhesive part (400b) is located on each of the short sides of the glass fiber tape (400).

6. The busbar assembly (100) according to claim 1, wherein:
the glass fiber tape (400) is wound multiple times along the longitudinal direction of the busbar (200) so as to form overlapping layers in at least some areas.

7. The busbar assembly (100) according to claim 6, wherein:
the glass fiber tape (400) is wound obliquely multiple times around the fire resistant silicone layer (300) so that some areas between any one layer of the glass fiber tape (400) and another layer adjacent thereto overlap.

8. The busbar assembly (100) according to claim 1, wherein:
the fire resistant silicone layer (300) includes a silicone material that is ceramified at high temperature.

9. A battery pack (1000) comprising:
at least one busbar assembly (100) as set forth in any one of claim 1;
battery modules (1200);
a BDU (Battery Disconnect Unit) module (1300) for controlling electrical connection of the battery modules (1200); and
a BMS (Battery Management System) module (1400) that monitors and controls the operation of the battery module,
wherein the at least one busbar assembly (100) electrically connects at least one of between the battery modules (1200), between the battery module (1200) and the BDU module (1300), between the battery module (1200) and the BMS module (1400), or between the BDU module (1300) and the BMS module (1400).

## Patentansprüche

1. Stromschienenanordnung (100), umfassend:
• eine Stromschiene (200) zum Führen einer elektrischen Verbindung innerhalb eines Batteriepacks;
• eine feuerbeständige Silikonschicht (300), die die äußere Umfangsfläche der Stromschiene umgibt; und
• ein Glasfaserband (400), das die feuerbeständige Silikonschicht (300) umgibt,
wobei das Glasfaserband (400) eine Glasfaserschicht (400a), einen klebenden Teil (400b), welcher ein Teil einer Oberfläche der Glasfaserschicht (400a) ist, auf dem ein Klebstoff bereitgestellt ist, und einen nichtklebenden Teil (400c), welcher ein Teil der einen Oberfläche der Glasfaserschicht (400a) ist, auf dem kein Klebstoff bereitgestellt ist, enthält,
wobei der klebende Teil (400b) und der nichtklebende Teil (400c) aus mehreren Teilen bestehen, und
der nichtklebende Teil (400c) ein Leerraum ist, der zwischen den klebenden Teilen (400b) gebildet ist und in dem die Glasfaserschicht (400a) freigelegt ist, so dass durch den Leerraum des nichtklebenden Teils (400c) ein Gasablasspfad gebildet wird.

2. Stromschienenanordnung (100) nach Anspruch 1, wobei:
• das Glasfaserband (400) ein rechteckiges Band mit einer langen Seite und einer kurzen Seite ist, und
• das Glasfaserband (400) die feuerbeständige Silikonschicht (300) entlang der langen Seite des Glasfaserbands (400) umgibt.

3. Stromschienenanordnung (100) nach Anspruch 2, wobei:
• der klebende Teil (400b) und der nichtklebende Teil (400c) abwechselnd entlang einer Richtung parallel zur langen Seite des Glasfaserbands (400) angeordnet sind.

4. Stromschienenanordnung (100) nach Anspruch 2, wobei:
• der klebende Teil (400b) und der nichtklebende Teil (400c) so konfiguriert sind, dass sie sich entlang einer Richtung parallel zur kurzen Seite des Glasfaserbands (400) erstrecken.

5. Stromschienenanordnung (100) nach Anspruch 2, wobei:
• der klebende Teil (400b) an jeder der kurzen Seiten des Glasfaserbands (400) angeordnet ist.

6. Stromschienenanordnung (100) nach Anspruch 1, wobei:
• das Glasfaserband (400) mehrfach entlang der Längsrichtung der Stromschiene (200) gewickelt ist, um in mindestens einigen Bereichen überlappende Schichten zu bilden.

7. Stromschienenanordnung (100) nach Anspruch 6, wobei:
• das Glasfaserband (400) schräg mehrfach um die feuerbeständige Silikonschicht (300) gewickelt ist, so dass sich einige Bereiche zwischen einer beliebigen Schicht des Glasfaserbands (400) und einer daran angrenzenden anderen Schicht überlappen.

8. Stromschienenanordnung (100) nach Anspruch 1, wobei:
• die feuerbeständige Silikonschicht (300) ein Silikonmaterial enthält, das bei hoher Temperatur keramisiert ist.

9. Batteriepack (1000), umfassend:
• mindestens eine Stromschienenanordnung (100) nach einem von Anspruch 1;
• Batteriemodule (1200);
• ein BDU-Modul (Batterietrenneinheitsmodul) (1300) zum Steuern einer elektrischen Verbindung der Batteriemodule (1200); und
• ein BMS-Modul (Batteriemanagementsystemmodul) (1400), das den Betrieb des Batteriemoduls überwacht und steuert,
wobei die mindestens eine Stromschienenanordnung (100) mindestens eine elektrische Verbindung zwischen den Batteriemodulen (1200), zwischen dem Batteriemodul (1200) und dem BDU-Modul (1300), zwischen dem Batteriemodul (1200) und dem BMS-Modul (1400) oder zwischen dem BDU-Modul (1300) und dem BMS-Modul (1400) herstellt.

## Revendications

1. Ensemble barre omnibus (100) comprenant :
une barre omnibus (200) pour guider une connexion électrique à l'intérieur d'un bloc-batterie ;
une couche de silicone résistante au feu (300) qui entoure la surface périphérique externe de la barre omnibus ; et
un ruban de fibres de verre (400) qui entoure la couche de silicone résistante au feu (300),
dans lequel le ruban de fibres de verre (400) comprend une couche de fibres de verre (400a), une partie adhésive (400b) qui est une partie d'une surface de la couche de fibres de verre (400a) sur laquelle un adhésif est prévu, et une partie non adhésive (400c) qui est une partie de ladite une surface de la couche de fibres de verre (400a) sur laquelle aucun adhésif n'est prévu,
dans lequel la partie adhésive (400b) et la partie non adhésive (400c) sont composées de plusieurs parties, et
la partie non adhésive (400c) est un espace vide qui est formé entre les parties adhésives (400b) et où la couche de fibres de verre (400a) est exposée de sorte qu'un trajet d'évacuation de gaz est formé par l'espace vide de la partie non adhésive (400c).

2. Ensemble barre omnibus (100) selon la revendication 1, dans lequel :
le ruban de fibres de verre (400) est un ruban rectangulaire présentant un côté long et un côté court, et
le ruban de fibres de verre (400) entoure la couche de silicone résistante au feu (300) le long du côté long du ruban de fibres de verre (400).

3. Ensemble barre omnibus (100) selon la revendication 2, dans lequel :
la partie adhésive (400b) et la partie non adhésive (400c) sont situées en alternance le long d'une direction parallèle au côté long du ruban de fibres de verre (400).

4. Ensemble barre omnibus (100) selon la revendication 2, dans lequel :
la partie adhésive (400b) et la partie non adhésive (400c) sont configurées pour s'étendre le long d'une direction parallèle au côté court du ruban de fibres de verre (400).

5. Ensemble barre omnibus (100) selon la revendication 2, dans lequel :
la partie adhésive (400b) est située sur chacun des côtés courts du ruban de fibres de verre (400).

6. Ensemble barre omnibus (100) selon la revendication 1, dans lequel :
le ruban de fibres de verre (400) est enroulé plusieurs fois le long de la direction longitudinale de la barre omnibus (200) de façon à former des couches se chevauchant dans au moins certaines zones.

7. Ensemble barre omnibus (100) selon la revendication 6, dans lequel :
le ruban de fibres de verre (400) est enroulé obliquement plusieurs fois autour de la couche de silicone résistante au feu (300) de sorte que certaines zones se chevauchent entre une couche quelconque du ruban de fibres de verre (400) et une autre couche adjacente à celle-ci.

8. Ensemble barre omnibus (100) selon la revendication 1, dans lequel :
la couche de silicone résistante au feu (300) comprend un matériau de silicone qui est céramisé à haute température.

9. Bloc-batterie (1000) comprenant :
au moins un ensemble barre omnibus (100) selon l'une quelconque de la revendication 1 ;
des modules de batterie (1200) ;
un module BDU (unité de déconnexion de batterie) (1300) pour commander la connexion électrique des modules de batterie (1200) ; et
un module BMS (système de gestion de batterie) (1400) qui surveille et commande le fonctionnement du module de batterie,
dans lequel l'au moins un ensemble barre omnibus (100) connecte électriquement au moins l'un d'entre les modules de batterie (1200), entre le module de batterie (1200) et le module BDU (1300), entre le module de batterie (1200) et le module BMS (1400), ou entre le module BDU (1300) et le module BMS (1400).
